# EUROPEAN PATENT APPLICATION

(11) **EP 4 760 235 A1**
(43) Date of publication of application: **17.06.2026**
(21) Application number: 25861772.9
(22) Date of filing: 03.09.2025
(51) Int. Cl.: G01N 15/02, G01N 1/22, G01N 23/223, H01M 10/04, H01M 4/04, B01D 46/54

(54) **SECONDARY BATTERY MANUFACTURING SYSTEM**

(30) Priority: 26.09.2024 KR 20240130624
(71) Applicant: LG ENERGY SOLUTION, LTD., Seoul 07335 (KR)
(72) Inventor: LEE, Yong Gu, Yuseong-Gu, Daejeon 34122 (KR); LEE, Jung Han, Yuseong-Gu, Daejeon 34122 (KR); LEE, Sang Mu, Yuseong-Gu, Daejeon 34122 (KR); OH, Jeong An, Yuseong-Gu, Daejeon 34122 (KR)
(74) Representative: BCKIP Part mbB
(86) International application number: PCT/KR2025/013599
(87) International publication number: WO 2026/071538

(57) **Abstract**

According to exemplary embodiments, a secondary battery manufacturing system is provided. The system includes secondary battery manufacturing equipment; a particle sensing device installed in the secondary battery manufacturing equipment and configured to collect particle data representing size and density of particles generated from the secondary battery manufacturing equipment; a particle collecting device installed in the secondary battery manufacturing equipment and configured to collect the particles; and a particle analyzer configured to collect composition data of the particles collected by the particle collecting device.

## Description

### [Technical Field]

The present disclosure relates to a secondary battery manufacturing system. This application claims the benefit of priority from Korean Patent Application No. 10-2024-0130624, filed on September 26, 2024, the entire contents disclosed therein are incorporated by reference into this disclosure.

### [Background]

Unlike primary batteries, secondary batteries can be charged and discharged multiple times. Secondary batteries are widely used as energy sources for various wireless devices such as handsets, laptops, wireless vacuum cleaners, etc. Recently, due to energy density improvements and economies of scale, the manufacturing cost per unit capacity of secondary batteries has dramatically decreased, and as the cruising distance of BEVs (battery electric vehicles) has increased to a level equivalent to fuel vehicles, the primary applications of secondary batteries are shifting from mobile devices to mobility.

A secondary battery is manufactured through an electrode process, an assembly process, and an activation process. To improve the yield and reliability of the secondary battery manufacturing process, identification of foreign materials generated inside secondary battery manufacturing equipment is necessary.

### [Summary]

### [Technical Problem]

The technical problem to be solved by the present disclosure is to provide a secondary battery manufacturing system that can identify foreign materials generated inside secondary battery manufacturing equipment.

### [Technical Solution]

According to exemplary embodiments of the present disclosure for solving the above-described problems, a secondary battery manufacturing system is provided. The system includes secondary battery manufacturing equipment; a particle sensing device installed in the secondary battery manufacturing equipment and configured to collect particle data representing size and density of particles generated from the secondary battery manufacturing equipment; a particle collecting device installed in the secondary battery manufacturing equipment and configured to collect the particles; and a particle analyzer configured to collect composition data of the particles collected by the particle collecting device.

The particle collecting device includes a filter and a suction device.

The filter is a HEPA filter.

The particle analyzer is configured to perform an XRF (X-ray Fluorescence) inspection on the filter to collect the composition data.

The system further includes a filter transfer system configured to transfer the filter to the particle analyzer.

The filter transfer system includes one of a humanoid, a mobile manipulator, and a quadruped robot.

The filter is detachably coupled to the particle collecting device.

The particle collecting device includes a first hose connected to the particle sensing device.

The particle collecting device further includes a second hose spaced apart from the particle sensing device.

The system further includes a server including a particle prediction model trained based on the particle data and the composition data.

The particle prediction model is configured to determine elements constituting the particles and an amount of each of the elements based on the particle data.

The server is configured to monitor a density of particles and a composition of particles in the secondary battery manufacturing equipment in real time.

According to exemplary embodiments, a secondary battery manufacturing system is provided. The system includes an air blow configured to blow an electrode sheet; a suction configured to suck particles generated from the electrode sheet; a particle collecting device connected to the suction and configured to collect the particles; and a particle analyzer configured to collect composition data of the particles collected by the particle collecting device.

The particle collecting device includes a hose connected to the suction and a filter connected to the hose.

### [Advantageous Effects]

A secondary battery manufacturing system according to exemplary embodiments of the present disclosure includes a particle sensing device installed in secondary battery manufacturing equipment and including a filter assembly and configured to collect particle data representing concentration and size of particles, and an analyzer configured to collect composition data representing composition of the particles collected by the filter assembly. A server of the secondary battery manufacturing system can be trained based on the particle data and the composition data, and accordingly, by monitoring the particle data in the secondary battery manufacturing equipment in real time, density, size, and composition of the particles in the secondary battery manufacturing equipment can be known.

The effects that can be obtained in exemplary embodiments of the present disclosure are not limited to the above-described effects, and other effects not mentioned can be derived and understood by a person skilled in the art from the following description. In other words, unintended effects of implementing the exemplary embodiments of the present disclosure may also be derived from the exemplary embodiments of the present disclosure by a person skilled in the art.

### [Brief Description of the Drawings]

FIG. 1 is a diagram illustrating a secondary battery manufacturing system according to exemplary embodiments.
FIG. 2 is a diagram illustrating a particle collecting device according to exemplary embodiments.
FIG. 3 is a diagram illustrating installation of a particle collecting device according to exemplary embodiments.
FIG. 4 is a graph illustrating a change in concentration of particles over time.
FIG. 5 illustrates type and amount of elements detected by an XRF (X-ray Fluorescence) inspection.
FIG. 6 is a flowchart for describing a method of providing a particle prediction model according to exemplary embodiments.

### [Detailed Description]

Hereinafter, preferred embodiments of the present disclosure will be described in detail with reference to the accompanying drawings. Prior to this, the terms or words used in the present specification and claims should not be construed as being limited to conventional or dictionary meanings, and should be interpreted as meanings and concepts that conform to the technical idea of the present disclosure based on the principle that the inventors can appropriately define the concept of terms in order to describe their own invention in the best way.

Therefore, it should be understood that the embodiments described in the present specification and the configurations shown in the drawings are merely one most preferred embodiment of the present disclosure and do not represent all of the technical ideas of the present disclosure, so that various equivalents and modifications that may replace them may exist at the time of the present application.

In addition, in describing the present disclosure, when it is determined that a detailed description of a related known configuration or function may obscure the gist of the present disclosure, the detailed description thereof will be omitted.

The embodiments of the present disclosure are provided to more completely describe the present disclosure to those skilled in the art, so the shapes and sizes of components in the drawings may be exaggerated, omitted, or schematically illustrated for clearer explanation. Therefore, the size or ratio of each component does not entirely reflect the actual size or ratio.

### (first embodiment and second embodiment)

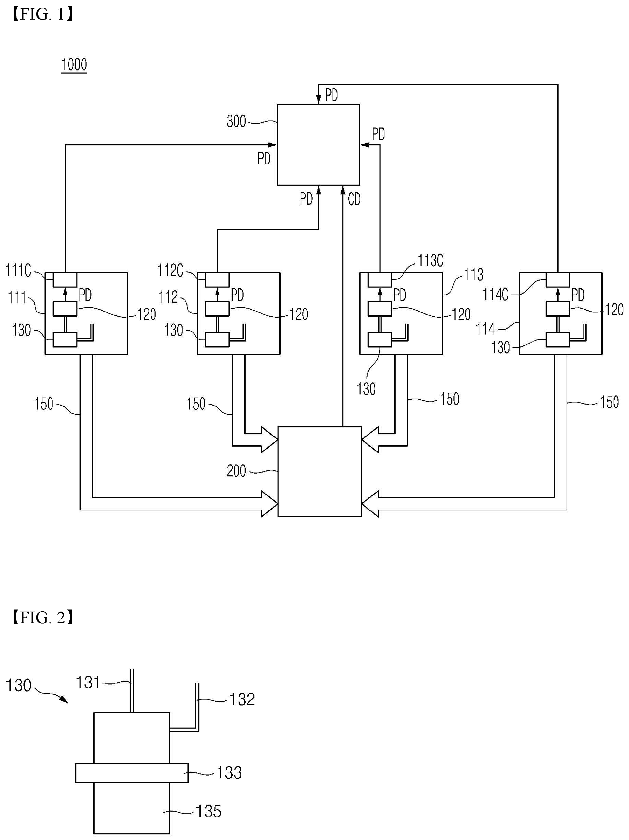

FIG. 1 is a diagram illustrating a secondary battery manufacturing system 1000 according to exemplary embodiments.

FIG. 2 is a diagram illustrating a particle collecting device 130 according to exemplary embodiments.

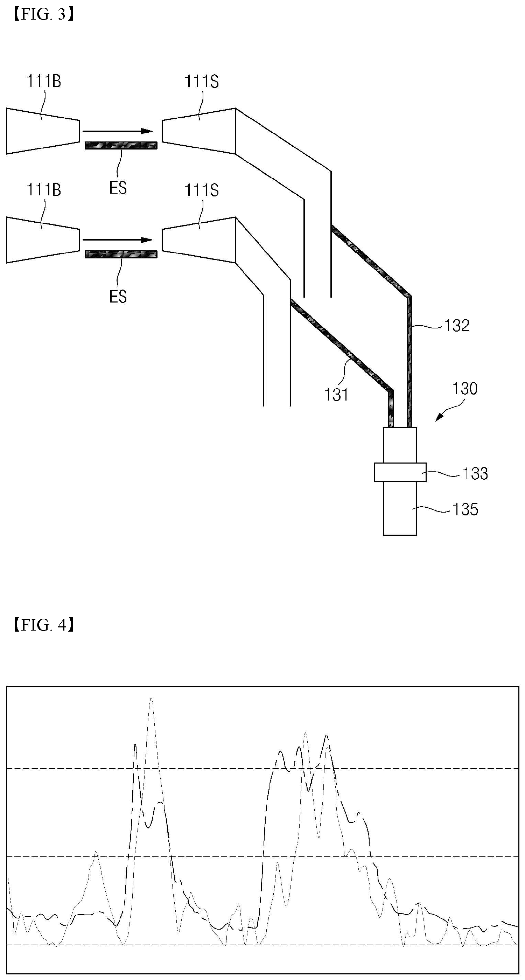

FIG. 3 is a diagram illustrating installation of a particle collecting device 130 according to exemplary embodiments.

Referring to FIG. 1 to FIG. 3, the secondary battery manufacturing system 1000 may be configured to perform a secondary battery manufacturing process. The secondary battery manufacturing system 1000 may be configured to perform at least a part of an electrode process, an assembly process, and an activation process.

The secondary battery manufacturing system 1000 may include secondary battery manufacturing equipment 111, 112, 113, 114, particle sensing devices 120, particle collecting devices 130, a filter transfer system 150, a particle analyzer 200, and a server 300.

Each of the secondary battery manufacturing equipment 111, 112, 113, 114 may be configured to perform at least one of a partial step of the electrode process and a partial step of the assembly process. Each of the secondary battery manufacturing equipment 111, 112, 113, 114 may perform different processes. Some of the secondary battery manufacturing equipment 111, 112, 113, 114 may perform the same process.

The electrode process may include forming an electrode assembly. The formation of the electrode assembly may include a mixing process, a coating process, a roll pressing process, and an optional slitting process.

The mixing process includes dissolving an electrode active material, a conductive material, a binder, and the like in a solvent to provide an electrode slurry. The solvent may be an aqueous solvent or a non-aqueous solvent. The solvent may include any one of DMSO, isopropyl alcohol, NMP, acetone, water, and mixtures thereof. The amount of solvent used may be determined based on a target viscosity of the slurry. Parameters for determining the amount of solvent used include coating thickness of the slurry, manufacturing yield, and workability.

The electrode active material may be a positive electrode active material, but is not limited thereto. The positive electrode active material is a material capable of causing an electrochemical reaction. The positive electrode active material may be a lithium transition metal oxide. The positive electrode active material may include an olivine-based lithium metal phosphate represented by Formula Li₁₊ₓM_{1-y}M'_{y}PO_{4-z}X_{z} (where M is a transition metal, more specifically any one of Fe, Mn, Co, and Ni, M' is any one of Al, Mg, and Ti, X is any one of F, S, and N, -0.5≤x≤+0.5, 0≤y≤0.5, and 0≤z≤0.1), but is not limited thereto.

The positive electrode active material may include layered compounds such as lithium cobalt oxide (LiCoO₂) and lithium nickel oxide (LiNiO₂) substituted with one or more transition metals; lithium manganese oxide substituted with one or more transition metals; lithium nickel-based oxide represented by Formula LiNi_{1-y}M_{y}O₂ (where M is any one of Co, Mn, Al, Cu, Fe, Mg, B, Cr, Zn, and Ga, and 0.01≤y≤0.7); lithium nickel cobalt manganese composite oxide represented by Li_{1+z}Ni_{b}Mn_{c}Co_{1-(b+c+d)}M_{d}O₍₂₋ₑ₎Aₑ (where -0.5≤z≤0.5, 0.1≤b≤0.8, 0.1≤c≤0.8, 0≤d≤0.2, 0≤e≤0.2, b+c+d<1, M is any one of Al, Mg, Cr, Ti, Si, and Y, and A is any one of F, P, and Cl), such as Li_{1+z}Ni_{1/3}Co_{1/3}Mn_{1/3}O₂ and Li_{1+z}Ni_{0.4}Mn_{0.4}Co_{0.2}O₂.

In addition, the electrode active material may be a negative electrode active material. The negative electrode active material may include, for example, carbon such as non-graphitizable carbon and graphite-based carbon. The negative electrode active material may include, for example, metal composite oxides such as LiₓFe₂O₃ (0≤x≤1), LixWO₂ (0≤x≤1), SnₓMe₁₋ₓMe'_{y}O_{z} (where Me is any one of Mn, Fe, Pb, and Ge, Me' is any one of Al, B, P, Si, elements of Groups 1, 2, 3 of the periodic table, and halogens; 0<x≤1; 1≤y≤3; 1≤z≤8). The negative electrode active material may include, for example, any one of lithium metal; lithium alloy; silicon-based alloy; and tin-based alloy. The negative electrode active material may include, for example, metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅. The negative electrode active material may also include, for example, conductive polymers such as polyacetylene and Li-Co-Ni-based materials.

The conductive material may have conductivity without causing chemical changes in the finally manufactured secondary battery. The conductive material may include, for example, graphite such as natural graphite or artificial graphite; carbon black such as acetylene black, Ketjen black, channel black, furnace black, lamp black, and thermal black; conductive fibers such as carbon fiber or metal fiber; metal powders such as fluorinated carbon, aluminum, and nickel powder; conductive whiskers such as zinc oxide and potassium titanate; conductive metal oxides such as titanium oxide; and polyphenylene derivatives.

The binder may improve bonding between the active material and the conductive material and bonding force to the current collector sheet (CS). The binder may include PVDF (Polyvinylidene Fluoride), polyvinyl alcohol, CMC, starch, hydroxypropyl cellulose, regenerated cellulose, polyvinylpyrrolidone, tetrafluoroethylene, polyethylene, polypropylene, EPDM, sulfonated EPDM, styrene-butadiene rubber, fluor rubber, and various copolymers.

In the coating process, the electrode slurry may be applied to an electrode current collector. The coating process may be a roll-to-roll process. The coating process may be performed by a die coater. In the coating process, an insulating slurry may be further applied to the electrode current collector.

In the roll pressing process, the electrode sheet including the electrode current collector and the active material may be passed between a pair of working rolls facing each other. The roll pressing process may be a roll-to-roll process. The electrode sheet may be pressed by the pair of working rolls. The roll pressing process may flatten the surface of the electrode sheet and improve the bonding force between the electrode active material and the electrode current collector.

By the slitting process, the electrode sheet may be separated into a plurality of electrode sheets. The slitting process may be selectively performed according to specifications of battery cells to be manufactured based on the electrode sheet.

In the notching process, a plurality of electrode tabs may be formed on the electrode sheet. The notching process may be performed by a laser notcher or by a notching machine including a notching knife.

The formation of the electrode assembly may further include a lamination and stacking process or a winding process. By the lamination and stacking process, a stacked electrode assembly including a plurality of positive electrodes stacked in one direction, a plurality of negative electrodes, and a plurality of separators separating them may be provided. By the winding process, a jelly-roll type electrode assembly including a wound structure of positive electrodes, negative electrodes, and separators may be provided.

The particle sensing devices 120 may be installed in the secondary battery manufacturing equipment 111, 112, 113, 114. Unlike FIG. 1, two or more particle sensing devices 120 may be installed in some of the secondary battery manufacturing equipment 111, 112, 113, 114, or the particle sensing devices 120 may be installed only in some of the secondary battery manufacturing equipment 111, 112, 113, 114.

The particle sensing devices 120 may be installed in places where there is a high possibility of generation of particles in the secondary battery manufacturing equipment 111, 112, 113, 114. For example, the particle sensing devices 120 may be installed near a blowing device configured to perform a blowing process on the electrode slurry on the electrode current collector, near a laser device configured to perform an ablation process on the electrode slurry, and near a notching device. The particle sensing devices 120 may also be installed at major foreign material generation locations during line setup, and traceability for the generation history of particles during line setup may be improved.

Each of the particle sensing devices 120 may be configured to detect an atmosphere in the secondary battery manufacturing equipment. Each of the particle sensing devices 120 may include a sensing module and a pump module.

The sensing module may be configured to detect particles contained in air in the secondary battery manufacturing equipment 111, 112, 113, 114 introduced into the sensing module. Each of the sensing modules may be a laser light scattering based sensor, but is not limited thereto. The sensing module may be configured to detect concentration and size of the particles. The sensing module may be configured to continuously detect the concentration and size of the particles.

The pump module may be configured to provide suction force. By the suction force of the pump module, air inside the secondary battery manufacturing equipment 111, 112, 113, 114 may be introduced into the particle sensing devices 120. The pump module may include one of a rotary vane vacuum pump, a turbo molecular pump, a dry scroll pump, a Roots blower pump, a diffusion pump, a side channel pump, a piston pump, a diaphragm pump, a cryopump, a sputter ion pump, and a gas ballast pump.

The secondary battery manufacturing equipment 111 may include a controller 111C. The secondary battery manufacturing equipment 112 may include a controller 112C. The secondary battery manufacturing equipment 113 may include a controller 113C. The secondary battery manufacturing equipment 114 may include a controller 114C. Each of the controllers 111C, 112C, 113C, 114C may be a PLC (Programmable Logic Controller). A PLC is a special type of microprocessor-based controller that uses programmable memory to store instructions and implements functions such as logic, sequencing, timing, counting, and arithmetic to control machines and processes. PLCs are easy to operate and program.

The particle data (PD) sensed by the particle sensing devices 120 may be transmitted to the server 300 through the controllers 111C, 112C, 113C, 114C. The sensing module of each of the particle sensing devices 120 may be connected to a corresponding one of the controllers 111C, 112C, 113C, 114C by wire or wirelessly to communicate with the corresponding one of the controllers 111C, 112C, 113C, 114C. The particle data (PD) may include time series data of size and concentration of the particles.

FIG. 4 is a graph illustrating a change in concentration of particles over time. That is, FIG. 4 is an example of the particle data (PD). In FIG. 4, the horizontal axis represents time, and the vertical axis represents density of the particles.

The particle collecting devices 130 may be installed in the secondary battery manufacturing equipment 111, 112, 113, 114. Each of the particle collecting devices 130 may include hoses 131, 132, a filter 133, and a suction device 135.

Air in the secondary battery manufacturing equipment 111, 112, 113, 114 may be introduced into the filter 133 through the hoses 131, 132, and particles in the air may be collected by the filter 133. The filter 133 may include a HEPA filter, but is not limited thereto.

The suction device 135 may be, for example, a suction fan. The suction device 135 may provide suction force for the hoses 131, 132 to suck air in the secondary battery manufacturing equipment 111, 112, 113, 114.

One hose 131 of the hoses 131, 132 of the particle collecting devices 130 may be connected to a corresponding one of the particle sensing devices 120. Accordingly, the composition data (CD) collected through the particle collecting devices 130 may be synchronized with the particle data (PD) and may be used for training of the particle prediction model as described below. The other hose 132 of the hoses 131, 132 of the particle collecting devices 130 may not be connected to the particle sensing devices 120.

In addition, unlike FIG. 1, the particle collecting devices 130 may be installed at separate locations from the particle sensing devices 120. FIG. 3 illustrates a particle collecting device 130 installed separately from the particle sensing devices 120. More specifically, the example of FIG. 3 relates to a particle collecting device 130 installed at a location where there is a high possibility of generation of particles.

FIG. 3 illustrates blowing devices 111B and suctions 111S of the secondary battery manufacturing equipment 111. The blowing devices 111B may spray air at a set pressure on the electrode sheet (ES) as indicated by arrows, and the suctions 111S may suck particles separated from the electrode sheet (ES) by the sprayed air. The operation of the blowing devices 111B and the suctions 111S may be performed to remove foreign materials on the electrode sheet (ES), but is not limited thereto.

The hoses 131, 132 may be connected to the suctions 111S. Accordingly, air containing particles sucked from the suctions 111S may flow into the particle collecting device 130, and accordingly, the particle collecting device 130 may collect the particles.

The filter 133 of the particle collecting device 130 is detachable and replaceable. The filter 133 may be transferred by the filter transfer system 150 for analysis after collecting a sufficient amount of particles. The filter 133 may be transferred to the particle analyzer 200 by the filter transfer system 150. The filter transfer system 150 may include any one of a humanoid, a mobile manipulator, and a quadruped robot. The filter transfer system 150 may be configured to separate the filter 133 from the particle collecting devices 130 and load the filter 133 into the particle analyzer 200. The filter transfer system 150 may be configured to reinstall a new filter 133 in the particle collecting devices 130.

The particle analyzer 200 may be configured to analyze the particles collected by the filter 133. The particle analyzer 200 may be configured to perform an XRF (X-ray Fluorescence) inspection on the particles collected by the filter 133. XRF inspection is an X-ray fluorescence analysis technology, and by irradiating X-rays to a sample and measuring the amount of fluorescent radiation generated, the type and amount of elements constituting the particles can be determined. XRF inspection is a non-destructive testing method that enables very accurate elemental analysis without damaging the sample.

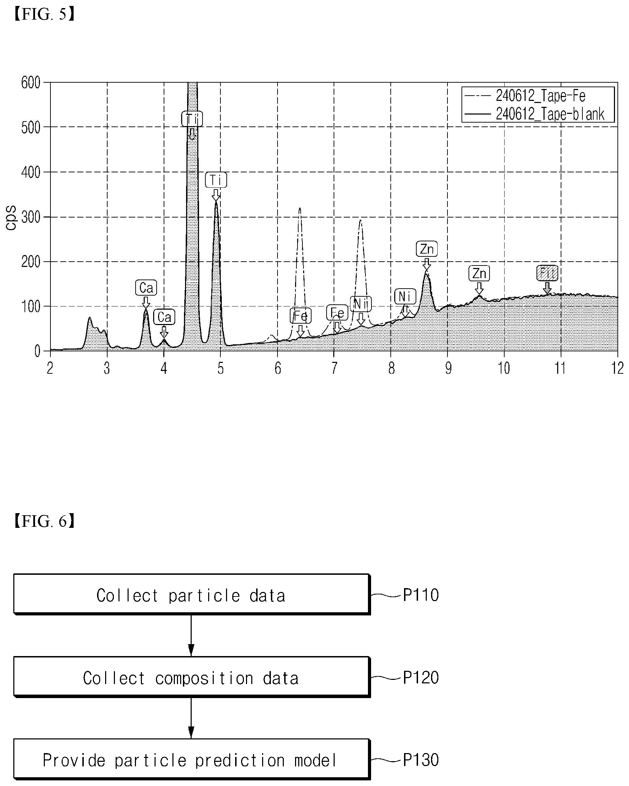

FIG. 5 is a graph illustrating type and amount of elements detected by an XRF inspection.

The composition data (CD) is similar to that shown in FIG. 5. The particle analyzer 200 may be configured to transmit the composition data (CD), which is a result of the XRF inspection, to the server 300. In FIG. 5, the area indicated by gray shading represents reference data collected from the filter 133 that does not collect particles, and the graph indicated by a dashed line represents the composition data (CD) collected from the filter 133 that collected particles.

The server 300 may be, for example, an MES (Manufacturing Execution System). The server 300 may be configured to perform transmission and update of recipes, management of input and completion amounts of materials, tracking of processes, and input, processing, output, and communication of various data for performing the secondary battery process.

According to other exemplary embodiments, the server 300 may be configured to store and process raw measurement data. The server 300 may manage the quality of processing of the electrode sheet (ES) by continuously monitoring the processing of the electrode sheet (ES) based on the measurement data. According to exemplary embodiments, the server 300 may be an SPC (Statistical Process Controller). The server 300 may identify problem conditions in a timely manner by collecting and analyzing manufacturing data in near real time, and provide an alarm to an operator before a potential problem occurs.

The server 300 may be configured to store the particle data (PD) and the composition data (CD). The server 300 may include a particle prediction model provided based on the particle data (PD) and the composition data (CD). The particle prediction model may be, for example, a machine learning model trained based on the particle data (PD) and the composition data (CD). The particle prediction model may be, for example, a deep learning model trained based on the particle data (PD) and the composition data (CD). The particle prediction model may be configured to determine composition of the particles based on time series data of size and concentration of the particles detected by the sensing module. The particle prediction model may be trained using the particle data (PD) as input and the composition data (CD) matched to the particle data (PD) as output, but is not limited thereto.

For providing the particle prediction model, the particle data (PD) and the composition data (CD) may be preprocessed. The preprocessing may include missing value handling, normalization and standardization, and data segmentation.

The particle prediction model may be a regression model. The particle prediction model may be based on algorithms such as linear regression, multi-layer perceptron, decision tree regression, random forest regression, and XGBoost.

For training the particle prediction model, a loss function may be set and an optimization algorithm may be used. The loss function may generally use mean squared error, and may minimize the difference between predicted values of the particle prediction model and measured data. The optimization algorithm may be any one of stochastic gradient descent and ADAM (Adaptive Moment Estimation), but is not limited thereto.

For constructing the model, various hyperparameters such as learning rate, size and number of hidden layers, and depth of decision tree may be set in advance, and additional features may be used in addition to the particle data (PD) and the composition data (CD).

The particle prediction model may be provided based on Python, but is not limited thereto. The particle prediction model may be based on Python libraries such as Scikit-learn, TensorFlow/Keras, and XGBoost.

According to exemplary embodiments, the server 300 may be configured to determine types of elements constituting the particles and an amount of each of the elements based on the particle data (PD) generated in real time. Accordingly, the server 300 may monitor the density of particles and the composition of the particles in the secondary battery manufacturing equipment 111, 112, 113, 114 in real time. The server 300 may be configured to generate a signal for generating an alarm when particles of a type fatal to yield are generated. The signal may be transmitted to a corresponding one of the controllers 111C, 112C, 113C, 114C.

The additional features may include low voltage defect test data. The low voltage defect test data may be collected through methods such as OCV measurement, charge and discharge test, load test, balancing test, low temperature and high temperature environment tests, and equivalent series resistance measurement.

A low voltage defect is when a secondary battery exhibits a voltage lower than the voltage expected in a normal operating range. A low voltage defect of a secondary battery may be caused by unwanted internal short circuits due to particles. According to exemplary embodiments, the server 300 may be configured to predict composition of particles based on particle data representing density and size of the particles, and further evaluate a low voltage defect risk of a battery cell based on the particle data (PD) cumulatively collected during a manufacturing process of the battery cell and the composition of particles predicted from the particle data (PD). Accordingly, selective high-intensity management may be performed for battery cells whose low voltage defect risk exceeds a threshold, and throughput and reliability of secondary battery manufacturing may be improved.

The server 300 may include a physical server or a cloud server. The server 300 may be implemented as a virtual server, but is not limited thereto. The server 300 may provide data and analysis results to an operator through various frameworks. The framework may include a protocol supporting data transmission so that a client device can visualize data through a user interface and provide updated visualization when data is calculated by the server 300. The protocol supporting the data transmission may use HTML, JavaScript, and/or JSON.

The server 300 may include various APIs (Application Programming Interfaces) for storing data in databases and other data management tools. The API may also be used for retrieval of data from databases of various data management systems. The data management system may provide access to databases, pull data from databases, retrieve data, and generate metrics. Here, a metric is a tool for visualizing data. A metric includes measurements generated in time series and may be used for monitoring applications and generating status alerts.

The particle analyzer 200 and the server 300 may be implemented in hardware, firmware, software, and combinations thereof. For example, the particle analyzer 200 and the server 300 may include computing devices such as workstation computers, desktop computers, laptop computers, and tablet computers. The particle analyzer 200 and the server 300 may include any one of complex processors such as simple controllers, microprocessors, CPUs, GPUs, processors configured by software, dedicated hardware, and firmware. The particle analyzer 200 and the server 300 may be implemented by, for example, general-purpose computers or application-specific hardware such as DSP (Digital Signal Process), FPGA (Field Programmable Gate Array), and ASIC (Application Specific Integrated Circuit).

The operations of the particle analyzer 200 and the server 300 may be implemented as instructions stored on a machine-readable medium that can be read and executed by one or more processors. Here, the machine-readable medium may include any mechanism for storing and/or transmitting information in a form readable by a machine (e.g., a computing device). For example, the machine-readable medium may include ROM (Read Only Memory), RAM (Random Access Memory), magnetic disk storage media, optical storage media, flash memory, electrical, optical, acoustical, or other forms of propagated signals (e.g., carrier waves, infrared signals, digital signals, etc.), and any other signals.

The particle analyzer 200 and the server 300 may be configured with firmware, software, routines, and instructions for performing the operations described above or any processes described below. For example, the particle analyzer 200 and the server 300 may be instantiated in memory.

The secondary battery manufacturing system 1000 may implement a plugin architecture with APIs for data acquisition to provide plug-and-play connection of sensors, measurement instruments, and inspection devices. Accordingly, resources at a specific process step and a specific site may be easily relocated to other processes and other sites, or new resources may be easily introduced to each process step and site.

In some embodiments, the secondary battery manufacturing system 1000 may further include a manual input system that allows an operator to input manufacturing data. The secondary battery manufacturing system 1000 may allow an operator's data input using an input tool and computer-based input of manufacturing data such as Excel file scraping. The manual input system may be, for example, an HMI (Human-Machine Interface) of SCADA (Supervisory Control And Data Acquisition). SCADA may generally include a combination of software and hardware such as PLCs and Remote Terminal Units (RTUs). An HMI is a main element of a SCADA system, which is a screen that supports communication between operators and the SCADA system. For example, manual input through the HMI may include selection of defect types and performance reflection upon completion.

### (third embodiment)

FIG. 6 is a flowchart for describing a method of providing a particle prediction model according to exemplary embodiments.

Referring to FIG. 1 and FIG. 6, at P110, particle data (PD) may be collected. The particle data (PD) may be collected by particle sensing devices 120. The particle data (PD) may be transmitted to a server 300 through controllers 111C, 112C, 113C, 114C.

Subsequently, at P120, composition data (CD) may be collected. Collection of the composition data (CD) may include separating a filter 133 from particle collecting devices 130, transferring the filter 133 to a particle analyzer 200, and determining type and amount of particles collected by the filter 133.

Subsequently, at P130, a particle prediction model may be provided. According to exemplary embodiments, as described with reference to FIG. 1 to FIG. 5, the particle prediction model may be trained based on the particle data (PD) and the composition data (CD).

As described above, the present disclosure has been described in more detail through drawings and embodiments. However, it should be understood that the configurations described in the drawings or the embodiments described in the present specification are merely one embodiment of the present disclosure and do not represent all of the technical ideas of the present disclosure, so various equivalents and modifications may exist that can substitute for these at the time of filing the present application.

## Claims

1. A secondary battery manufacturing system, comprising:
secondary battery manufacturing equipment;
a particle sensing device installed in the secondary battery manufacturing equipment and configured to collect particle data representing size and density of particles generated from the secondary battery manufacturing equipment;
a particle collecting device installed in the secondary battery manufacturing equipment and configured to collect the particles; and
a particle analyzer configured to collect composition data of the particles collected by the particle collecting device.

2. The secondary battery manufacturing system of claim 1, wherein the particle collecting device comprises a filter and a suction device.

3. The secondary battery manufacturing system of claim 2, wherein the filter is a HEPA filter.

4. The secondary battery manufacturing system of claim 2, wherein the particle analyzer is configured to perform an XRF (X-ray Fluorescence) inspection on the filter to collect the composition data.

5. The secondary battery manufacturing system of claim 2, further comprising a filter transfer system configured to transfer the filter to the particle analyzer.

6. The secondary battery manufacturing system of claim 5, wherein the filter transfer system comprises one of a humanoid, a mobile manipulator, and a quadruped robot.

7. The secondary battery manufacturing system of claim 2, wherein the filter is detachably coupled to the particle collecting device.

8. The secondary battery manufacturing system of claim 1, wherein the particle collecting device comprises a first hose connected to the particle sensing device.

9. The secondary battery manufacturing system of claim 8, wherein the particle collecting device further comprises a second hose spaced apart from the particle sensing device.

10. The secondary battery manufacturing system of claim 1, further comprising a server comprising a particle prediction model trained based on the particle data and the composition data.

11. The secondary battery manufacturing system of claim 10, wherein the particle prediction model is configured to determine elements constituting the particles and an amount of each of the elements based on the particle data.

12. The secondary battery manufacturing system of claim 10, wherein the server is configured to monitor a density of particles and a composition of particles in the secondary battery manufacturing equipment in real time.

13. A secondary battery manufacturing system, comprising:
an air blow configured to blow an electrode sheet;
a suction configured to suck particles generated from the electrode sheet;
a particle collecting device connected to the suction and configured to collect the particles; and
a particle analyzer configured to collect composition data of the particles collected by the particle collecting device.

14. The secondary battery manufacturing system of claim 13, wherein the particle collecting device comprises a hose connected to the suction and a filter connected to the hose.
